# EUROPEAN PATENT APPLICATION

(11) **EP 4 375 344 A1**
(43) Date of publication of application: **29.05.2024**
(21) Application number: 22209156.3
(22) Date of filing: 23.11.2022
(51) Int. Cl.: C09D 119/00, B68G 7/00

(54) **UPHOLSTERED OBJECT**

(71) Applicant: Cooloo Invest B.V., 5861 EJ Wanssum (NL)
(72) Inventor: Schraven, Leonardus Petrus Maria, 5861 EJ Wanssum (NL)
(74) Representative: IPecunia

(57) **Abstract**

Process for upholstering an object with a material, comprising the steps of
a. grinding a material to obtain a grinded material having a particle size less than 2.5 mm;
b. coating an object with an aqueous binder to obtain a coated object;
c. applying the grinded material to the coated object by means of electrostatic spraying to obtain a wet upholstered object;
d. optionally repeating steps b and c; and
e. drying the wet upholstered object to obtain an upholstered object.

## Description

The invention relates to a process for upholstering an object with a material, the upholstered object and use of the object.

Recycling of materials and use of waste materials becomes more and more important in the coming years. Also, refurbishing of objects is becoming more and more popular in times of scarcity of raw materials. It is however a challenge to reuse different materials that are currently deposited in landfills or burnt to get rid of.

There is a need for an improved process for upholstering an object for use or reuse, and for use of materials as an upholstering of the object.

The inventors have found a method for upholstering an object with a material which is the subject of the present invention.

The invention relates to a process for upholstering an object with a material, comprising the steps of
a. grinding a material to obtain a grinded material having a particle size less than 2.5mm;
b. coating an object with an aqueous binder to obtain a coated object;
c. applying the grinded material to the coated object by means of electrostatic spraying to obtain a wet upholstered object;
d. optionally repeating steps b and c; and
e. drying the wet upholstered object to obtain an upholstered object.

Advantages of the process according to the invention are the efficient use of waste or recycled material as an upholstering layer on an object, the provision of a simple process that can be applied on many different objects, obtaining a durable object which can serve for many years, versatility in changing the material for upholstering the object, and prolonging the lifetime of an object in an economical sustainable fashion. Furthermore the process provides a very efficient upholstering process, using less energy compared to known processes: for example energy consumption is reduced with at least 90% compared to traditional upholstering methods.

### Detailed description

### Object

The object to be upholstered, can be any object having in principle any type of surface. The surface can for example be made from metal, wood, rubbery materials or any other material, which can be glued with the aqueous binder used according to the present invention.

### Material

The material can be in principle any material which can be grinded to a small particle size. Preferably, the material is a recycled material or waste material. Examples of suitable materials for upholstering the object are for example leather; cork; textiles; woody materials like walnut, peach pit, acorn, chestnut, oak, beach; rubbery materials like tyres, shoe soles, mattresses; hard materials like pearl glass, metal powder, sand, gravel, etc.

### Upholstering

Upholstering is defined as bonding a thin layer of material to the surface of an object, for example as a decorative layer. Upholstering can also be defined as coating or covering of the surface of the object with a grinded material.

### Grinding

The grinding of the recycled material can be performed in any known way. Examples of grinding are milling, sanding, chopping, use of a hammer mill and the like. An example of a suitable milling system is a Retsch SM 300, which contains metal sieves that determine the particle size of the milled recycled material.

### Particle size

Particle size of materials before grinding can be any size between 1 mm and several decimeters. Preferably the particle size of the materials before grinding ranges between 1 millimeter and 1 cm. After grinding, the particle size of the milled recycled material is typically smaller than 2.5 mm, preferably smaller than 1.5 mm, or smaller than 1 mm. Preferably the particle size is smaller than 0.84 mm, and larger than 0.1 mm.

The particle size is determined by sieving the particles through a mesh filter having an appropriate mess size. For example, materials having a particle size smaller than 0.84 mm are understood to be a sieve fraction which can pass a mesh 20 filter (having holes of 0.841 mm). It is preferred that the amount of fines is limited, for examples less than 20 wt% of all particles, more preferably less than 10 wt%. Fines are particles having a size of less than 0.1 mm.

### Coating

A coating is applied to the surface of the object by coating of the surface with an aqueous binder, followed by application of the milled recycled material. Typically the thickness of the layer of aqueous binder on the surface of the object ranges between 50 and 1000 micrometers. Optionally more layers, like for example two layers, of the aqueous binder can be applied to the surface of the object.

The layer thickness of the grinded material typically ranges between 0.2 and 3 millimeters. It is possible to apply more than one upholstering layer on the object. This can be done by sequentially applying aqueous binder and grinded material, for example by applying two or three consecutive layers of binder and grinded material.

### Aqueous binder

The aqueous binder used in the process of the present invention preferably comprises and acrylate binder, such as an acrylic ester copolymer or an styrene acrylic ester copolymer. The binder preferably contains between 40 and 80 wt% of an styrene acrylic ester copolymer, between 20 and 60 wt% of an acrylic ester copolymer, and between 0 and 10 wt% of additives, like for example biocides, anti foaming agents, thickeners, fillers and the like, all wt% relative to the amount of organic components in the aqueous binder.

Preferably the amount of styrene acrylic ester copolymer ranges between 50 to 70 wt%, and the amount of acrylic ester copolymer ranges between 25 and 45 wt%, relative to the amount of organic components in the binder.

The amount of organic components typically ranges between 50 and 75 wt% relative to the total amount of aqueous binder, which means that the aqueous binder comprises between 30-50 wt% water.

Styrene acrylic ester copolymers and acrylic ester copolymers are known to the skilled man in the art.

The amount of aqueous binder to be applied to the surface of the object typically ranges between 150 and 250 g/m2. When more than 250 g/m2 is applied, wet spots can be seen after application of the grinded material. When less than 150 g/m2 is applied, the grinded material may not sufficiently bind to the surface of the object.

The amount of aqueous binder to be used will also depend on the type of grinded material to be applied. Some types of materials like cork do not absorb a lot of aqueous binder. In such cases, application of 150-200 g/m2 of binder can be sufficient.

Other materials, like for example cotton from recycled jeans, tend to absorb much more aqueous binder and need to be applied with more binder compared to cork, for example between 180 and 250 g/m2.

The aqueous binder preferably contains a flexible material which acts as a thickener. A preferred flexible material to be used is a xanthan gum. Preferably the aqueous composition comprises between 0.1-1.5 wt%, more preferably between 0.2-1 wt% xanthan gum, relative to the amount of aqueous binder. The xanthan gum improves the thixotropic behavior of the aqueous binder.

### Electrostatic application

The grinded material is preferably applied with an electrostatic application technique. Application of grinded material with an electrostatic charge will result in an evenly distribution of the grinded material, application of a uniform layer, and application of grinded material in all corners of the surface of the object.

Preferred electrostatic application techniques are electrostatic flocking and powder coating. Electrostatic flocking is a textile technology that employs a Coulombic driving force to launch short fibers from a charging source towards the coated object, resulting in a dense array of aligned fibers perpendicular to the surface of the object.

Powder coating is a type of coating wherein the grinded material is applied as a free-flowing, dry powder. Powder coating is typically applied electrostatically and then dried under heat In the present application, the object does not need to have a charge like what is used in normal electrostatic powder coating. It is enough that the grinded material is charged when applied to the surface of the object.

It is preferred that sufficient air supply is used when performing the powder coating and/or electrostatic flocking to transport the charged grinded material to the coated object. Preferably the amount of grinded material which is bound to the coated surface of the object ranges between 50 and 500 gr/m2.

Preferably the volume of air supply used to assist in the electrostatic application of the grinded material ranges between 10-100 times the volume of the grinded material. For example when the volume of grinded material to be applied to an object is 0.1 m3/hour, the volume of air to be used to apply the material to the object ranges preferably between 1 and 10 m3/hour.

### Application of pressure/rolling.

It is an option to apply pressure to the coated layer, for example with a roller, to press the grinded material into the layer of aqueous binder.

### Drying

After application of the grinded material, the binder is preferably dried by application of air, for example hot air.

After drying the surface of the upholstered object can be coated with a water repelling coating.

### Examples

### Example 1: binder composition

A binder composition is prepared by mixing 65 wt% of an styrene acrylic ester copolymer dispersion (60% solids), 32.5 wt% of an acrylic ester copolymer dispersion (60 % solids), 0.35 wt% of a Xanthan gum, and additives like biocide, defoamer.

### Example 2: grinding of material

The following materials have been grinded in a Retsch 300 SM miller, having a number of different mesh sieves for separating grinded material into different fractions: leather, cork, pits, coffee, peach kernels, wood, fabrics.

### Example 3: application of material to an object

An object (for example a chair) is sprayed with the binder composition as prepared in example 1. 200 g/m2 of binder composition is applied in an uniform way.

With a GEMA powder coater, which is supported with air for transport of particles, different grinded materials are applied to the wet coating layer of the object. In this example using leather and cork, 30 times the volume of air is used relative to the volume of grinded material. Optionally after grinding applied layer of grinded material is rolled.

After drying with hot air, the object (chair) can be used.

### Figures.

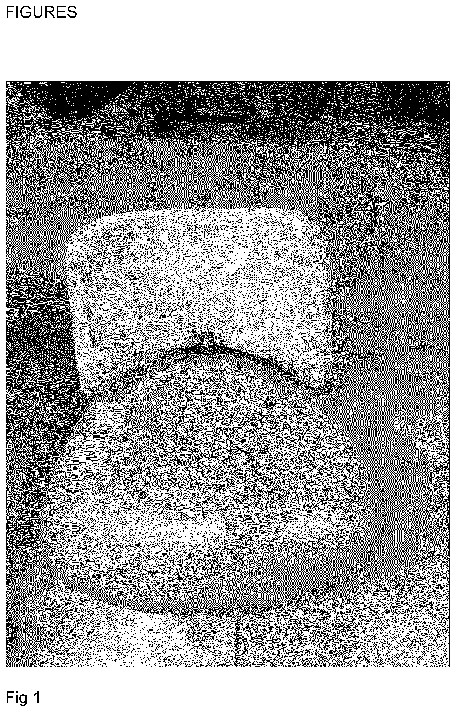

- Figure 1: shows a 30 year old used chair, before providing a new upholstery layer.

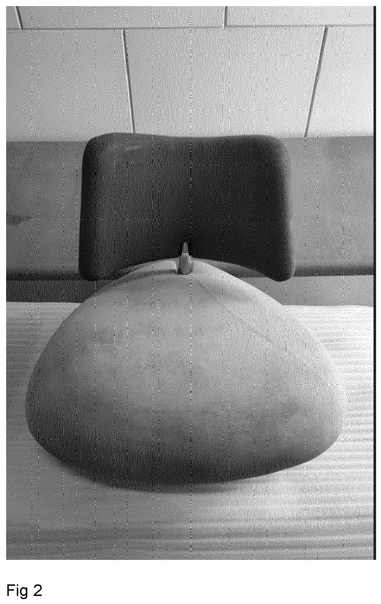

- Figure 2: shows the chair of fig 1 with a new upholstery layer.

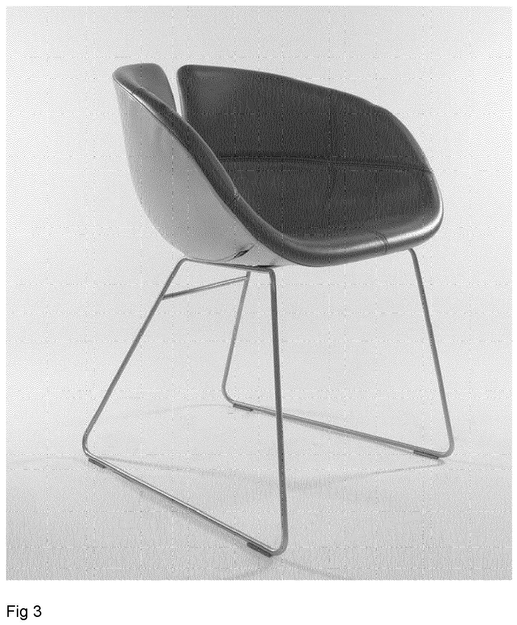

- Figure 3: shows a Fjord chair before upholstering.

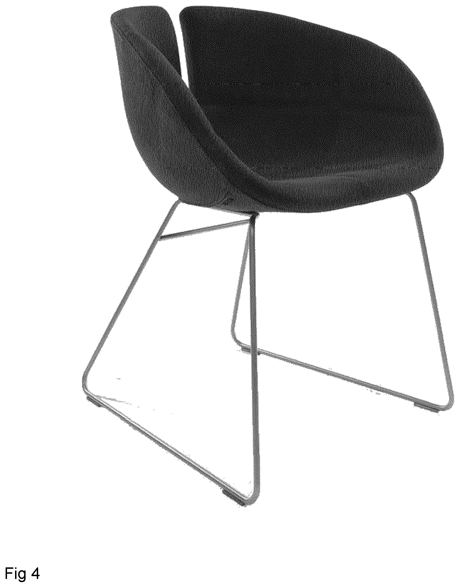

- Figure 4: shows the Fjord chair after upholstering.

## Claims

1. Process for upholstering an object with a material, comprising the steps of
a. grinding a material to obtain a grinded material having a particle size less than 2.5 mm;
b. coating an object with an aqueous binder to obtain a coated object;
c. applying the grinded material to the coated object by means of electrostatic spraying to obtain a wet upholstered object;
d. optionally repeating steps b and c; and
e. drying the wet upholstered object to obtain an upholstered object.

2. The process according to claim 1, wherein the grinded material has a particle size smaller than 1.5 mm, more preferably smaller than 1 mm, more preferably smaller than 0.84 mm, most preferably between 0.1 mm and 0.84 mm.

3. The process according to any one of the preceding claims, wherein material is grinded by means of milling, grinding, sanding, chopping, or a hammer mill.

4. The process according to any one of the preceding claims, wherein the material is a recycled material or a waist material.

5. The process according to any one of the preceding claims, wherein the material is chosen from the group consisting of leather; cork; textiles; woody materials like walnut, peach pit, acorn, chestnut, oak, beach; rubbery materials like tyres, shoe soles, mattresses; hard materials like pearl glass, metal powder, sand, gravel.

6. The process according to any one of the preceding claims, wherein the upholstering of the object is refurbishing of the object.

7. The process according to any of the preceding claims, wherein the aqueous binder comprises between 40 and 80 wt% of an styrene acrylic ester copolymer and between 20 and 60 wt% of an acrylic ester copolymer, relative to the amount of organic materials of the aqueous binder.

8. The process according to any one of the preceding claims, wherein the binder comprises Xantar Gum, preferably between 0.1-1.5 wt%, more preferably between 0.2-1 wt%, relative to the weight of the binder composition.

9. The process according to any of the preceding claims, wherein the amount of solids of the aqueous binder ranges between 50 and 75 wt%.

10. The process according to any of the preceding claims, wherein the aqueous binder is applied to the object between 150 and 250 gr/m2.

11. The process according to any one of the preceding claims, wherein the binder is applied in a layer thickness between 0.5 mm and 3 mm.

12. The process according to any one of the preceding claims, wherein during step c air is added to support the application of the grinded material.

13. The process according to claim 12, wherein the volume of air ranges between 10-100 times the volume of grinded material applied on the coated object.

14. The process according to any one of the preceding claims, wherein the amount of grinded material applied in step c ranges between 50-500 gr/m2 relative to the surface of the coated object.
